# EUROPÄISCHE PATENTSCHRIFT

(11) **EP 3 980 241 B1**
(45) Veröffentlichungstag und Bekanntmachung des Hinweises auf die Patenterteilung: **02.08.2023**
(21) Anmeldenummer: 20732131.6
(22) Anmeldetag: 03.06.2020
(51) Int. Cl.: B29C 49/46, B29C 49/06, B29C 49/36, B29L 31/00

(54) **VERFAHREN UND VORRICHTUNG ZUM HERSTELLEN VON MIT FLÜSSIGEM FÜLLGUT BEFÜLLTEN BEHÄLTERN AUS THERMISCH KONDITIONIERTEN VORFORMLINGEN**
METHOD AND DEVICE FOR PRODUCING CONTAINERS, FILLED WITH LIQUID FILLING MATERIAL, FROM THERMALLY CONDITIONED PREFORMS
PROCÉDÉ ET DISPOSITIF POUR FABRIQUER DES RÉCIPIENTS REMPLIS D'UNE MATIÈRE DE REMPLISSAGE LIQUIDE À PARTIR DE PRÉFORMES CONDITIONNÉES THERMIQUEMENT

(30) Priorität: 04.06.2019 DE 102019114953
(43) Veröffentlichungstag der Anmeldung: 13.04.2022
(73) Patentinhaber: KHS Corpoplast GmbH, 22145 Hamburg (DE)
(72) Erfinder: BAUMGARTE, Rolf, 22926 Ahrensburg (DE); LINKE, Michael, 22159 Hamburg (DE); LITZENBERG, Michael, 21039 Börnsen (DE)
(74) Vertreter: Eisenführ Speiser
(86) Internationale Anmeldenummer: PCT/EP2020/065258
(87) Internationale Veröffentlichungsnummer: WO 2020/245138

(56) Entgegenhaltungen:
- WO-A1-2013/020885
- US-B2- 9 573 705
- US-B2- 9 987 790

## Beschreibung

Die Erfindung bezieht sich auf ein Verfahren nach dem Oberbegriff des Anspruchs 1 und eine Vorrichtung nach dem Oberbegriff des Anspruchs 7.

Gattungsgemäße Verfahren und Vorrichtungen kommen zum Einsatz in Behälter-Form- und Füllanlagen. In solchen Anlagen werden thermisch konditionierte Vorformlinge durch Einleiten von flüssigem Füllgut unter hohem Druck an einer Form- und Füllstation gleichzeitig in die gewünschte Behälterform expandiert und die sich formenden Behälter gefüllt. Die Vorformlinge sind dabei während des Form- und Füllvorganges in einer Form der Form- und Füllstation angeordnet, die die endgültige gewünschte Behälterform vorgibt. Gattungsgemäße Verfahren und Vorrichtungen sind in den Patentschriften WO2013/020885A1, US9573705B2 und US9987790B2 beschrieben.

Die thermische Konditionierung der Vorformlinge erfolgt z. B. in Heizgassen oder Heizstrecken, wie sie z.B. in der WO 2012/083910 A1 beschrieben sind.

Die erwähnten Form- und Füllanlagen sind im Stand der Technik bekannt. Es wird hierzu auf die DE 10 2010 007 541 A1 verwiesen.

Form- und Füllanlagen sollen herkömmliche Anlagen ersetzen, in denen eine separate Blas- und eine separate Füllstation vorgesehen sind. In herkömmlichen Anlagen werden die thermisch konditionierten Vorformlinge in zwei Schritten zunächst in einer Blasstation durch Einleiten von Gas unter Hochdruck zu den fertigen Behältern ausgeformt, die dann in einem nächsten Schritt in der Füllstation befüllt werden.

Bei den hier angesprochenen Form- und Füllanlagen erfolgt das Formen und Befüllen dagegen in einem Schritt. Wie oben bereits gesagt wird dazu das Füllgut unter hohem Druck in der gewünschten Dosiergeschwindigkeit und den gewünschten Taktzahlen in die Vorformlinge geleitet wird. Typische Füllzeiten liegen im Bereich von 100-150 ms, was Volumenströme von bis zu 20 Liter/s und Drücke von bis zu 40 bar erfordert.

Im Hinblick auf diese Anforderungen sind in bekannten Form- und Füllanlagen z.B. gattungsgemäße Vorrichtungen vorgesehen, die die benötigten Drücke und Volumenströme ermöglichen sollen.

Das Füllgut wird durch eine Füllgutquelle, in der Regel einen Füllgutspeicher bereitgestellt, der über eine Zuleitung mit einem Füllventil verbunden ist, das den Zustrom zu den Vorformlingen beherrscht.

In der Regel handelt es sich bei dem Füllgutspeicher um einen mit einer Druckpumpe beaufschlagten Druckspeicher, der das Füllgut mit einem definierten Druck in die Zuleitung abgibt.

Bei bekannten Vorrichtungen ist weiterhin zwischen Füllgutquelle und Füllventil eine Verdrängerpumpe angeordnet. Die Füllgutquelle steht über einen ersten eingangsseitigen Abschnitt der Zuleitung mit der Verdrängerpumpe in Fluidverbindung, die ihrerseits über einen zweiten ausgangsseitigen Abschnitt der Zuleitung mit dem Füllventil verbunden ist.

Die Verdrängerpumpe dient insbesondere dazu, den erforderlichen Druck und Volumenstrom bereitzustellen, mit dem das Füllgut über den zweiten Abschnitt der Zuleitung bei geöffnetem Füllventil in den Vorformling bzw. den sich bildenden Behälter abgegeben wird.

In gattungsgemäßen Verfahren bzw. Vorrichtungen ist dabei vorgesehen, dass jeweils eine Verdrängerpumpe einer Form- und Füllstation zugeordnet ist. Dies stellt einen relativ hohen baulichen Aufwand dar und ist außerdem wartungsintensiv. Einen solchen Stand der Technik zeigen die WO2018/141347 A1 und die DE 10 2018 106 930 A1.

Aufgabe der Erfindung ist es ein Verfahren bereitzustellen, mit dem sich dieser Aufwand reduzieren lässt. Eine weitere Aufgabe ist es, eine Vorrichtung bereitzustellen, die weniger Bauraum erfordert und kostengünstiger betrieben werden kann.

Gelöst werden diese Aufgaben mit einem Verfahren, das die kennzeichnenden Merkmale des Anspruchs 1 aufweist, sowie mit einer Vorrichtung, die die kennzeichnenden Merkmale des Anspruches 7 aufweist.

In den Unteransprüchen sind vorteilhafte Ausgestaltungen angegeben.

Wie aus dem Stand der Technik bekannt arbeitet das erfindungsgemäße Verfahren mit einer Füllgutquelle, die die gewünschte Füllgutmenge bereitstellt.

Die Füllgutquelle steht in Strömungsverbindung mit der Form- und Füllstation.

Zwischen der Füllgutquelle und der Form- und Füllstation ist weiterhin eine Verdrängerpumpe vorgesehen, die den beim Füllen und Formen des Vorformlings erforderlichen Druck und Volumenstrom, bzw. die unterschiedlichen erforderlichen Volumenströme erzeugt. In der Regel erfolgt die Befüllung und Formung der Vorformlinge nicht bei einem konstanten Volumenstrom. Häufig wird zunächst ein geringerer Volumenstrom, z. B. 2 Liter/sec, dann ein höherer Volumenstrom, z. B. 5 Liter/sec, und schließlich wieder ein niedriger Volumenstrom von z.B. 2 Liter/sec, verwendet. Dies sind nur Beispielwerte. Je nach Material und Volumen des Vorformlings können auch andere Volumenstromprofile mit Pumpgeschwindigkeiten von z.B. bis zu 20 Liter/sec eingesetzt werden. Diese lassen sich unproblematisch durch entsprechende Ansteuerung der Verdrängerpumpe realisieren.

Der Begriff Füllgutquelle ist weit auszulegen. Es kann sich dabei z.B. um eine Zapfstation an einer Anlage handeln, mit der das Füllgut hergestellt wird. Befindet sich die Vorrichtung z.B. an einem anderen Ort, so wird in der Regel ein Füllgutspeicher als Quelle eingesetzt.

Die Abgabe von Füllgut von der Füllgutquelle kann druckfrei oder unter Druck erfolgen.

Bei druckfreier Abgabe, müssten die Verdrängerpumpen so ausgelegt sein, dass sie das Füllgut ansaugen können. Alternativ wäre auch denkbar, eine weitere Pumpe in der Zuleitung vorzusehen, mit der das Füllgut von der Füllgutquelle zu der Verdrängerpumpe gepumpt werden kann.

Bevorzugt wird eine Füllgutquelle vorgesehen, die das Füllgut unter Druck abgibt. Es kann sich dabei z.B. um einen Füllgutdruckspeicher handeln, der z. B. über eine kontinuierlich laufende Pumpe mit Füllgut unter Druck beaufschlagt wird. Der Einsatz einer Quelle, die das Füllgut unter Druck abgibt, hat hydraulische Vorteile und erlaubt eine kleinere Auslegung z.B. der Verdrängerpumpen.

Erfindungsgemäß ist nun vorgesehen, dass jeder Verdrängerpumpe mindestens zwei Form- und Füllstationen zugeordnet sind, an denen die Verdrängerpumpe Füllgut in die Vorformlinge pumpen kann.

Ein Pumpvorgang würde in etwa so aussehen, dass zunächst die Pumpe gestartet und das Füllventil der zugeordneten Füll- und Formstation geöffnet wird. Dann würde die Pumpe den Vorformling mit einem gewünschten Volumenstromprofil und Druck mit dem Füllgut beaufschlagen und nach Abschluss des Form- und Füllvorganges würde das Füllventil wieder verschlossen und die Pumpe gestoppt. Dieser Vorgang soll im Folgenden auch mit dem Begriff "Versorgen" bezeichnet werden.

Denkbar ist, dass eine Verdrängerpumpe die mindestens zwei zugeordneten Form- und Füllstationen parallel bzw. zeitlich überlappend versorgt. Es würde dazu genügen, Füllgutvolumen und Pumpleistung der Verdrängerpumpe entsprechend anzupassen. Allerdings werden in industriellen Prozessen den Form- und Füllstationen einer Vorrichtung die temperierten Vorformlinge nacheinander zugeführt und möglichst sofort weiterverarbeitet, um zu verhindern, dass sich der Vorformling zu stark abkühlt, bevor er umgeformt wird.

Es kann sich dabei um taktweise arbeitende Maschinen handeln oder bevorzugt auch um Maschinen nach dem Rundläuferprinzip handeln, bei denen die Form- und Füllstationen auf einem umlaufenden Arbeitsrad angeordnet sind. Auf jeden Fall stehen bei solchen Prozessen keine zwei Vorformlinge gleichzeitig über einen gleichen Zeitraum zur Befüllung und Formung zur Verfügung. Eine parallele Befüllung dieser zwei um mindestens einen Takt bzw. zeitlich versetzten Vorformlinge mit einem übereinstimmenden Volumenstromprofil und mit einer Pumpe wäre daher in industriellen Prozessen problematisch. Möglich wäre nur eine zeitlich überlappende Befüllung mit konstantem Volumenstrom.

Bevorzugt ist daher vorgesehen, dass die Verdrängerpumpe die ihr zugeordneten Form- und Füllstationen nacheinander versorgt.

Weiterhin bevorzugt ist dabei vorgesehen, dass mehrere Verdrängerpumpen vorgesehen sind, die zusammen eine Mehrzahl von Form- und Füllstationen in definierter Reihenfolge versorgen. Bei dieser Ausgestaltung ist vorgesehen, dass zwischen den von einer Pumpe versorgten Form- und Füllstationen mindestens eine Form- und Füllstation liegt, die von einer anderen Verdrängerpumpe versorgt wird. Auf diese Weise lassen sich höhere Taktzahlen bzw. bei Vorrichtungen mit einem Arbeitsrad höhere Drehgeschwindigkeiten realisieren. Denkbar ist z. B., dass die Verdrängerpumpen nacheinander jeweils die erste ihnen zugeordnete Form- und Füllstation versorgen und danach dann entsprechend die mindestens eine weitere zugeordnete Form- und Füllstation. Bei den letztgenannten Ausgestaltungen wäre dann wiederum auch eine zeitlich überlappende Befüllung von Vorformlingen möglich.

Nimmt man als Beispiel ein Arbeitsrad mit einer Umlaufzeit von 1800ms, auf dem die Form- und Füllstationen angeordnet sind, so könnten mit einer Pumpe, die 300ms für einen Form- und Füllprozess benötigt, 6 Stationen nacheinander versorgt werden. Mit 2 Pumpen, die jeweils abwechselnd aufeinanderfolgende Stationen versorgen, ließen sich 12 Stationen versorgen, mit 3 Pumpen 18 und so fort.

Die Erfindung bezieht sich weiterhin auch auf eine Vorrichtung zum Herstellen von mit flüssigem Füllgut befüllten Behältern.

Wie aus dem Stand der Technik bekannt, wird bei der Vorrichtung Füllgut von einer Quelle in eine Zuleitung zu dem Füllventil einer Form- und Füllstation abgegeben. Zwischen Füllgutquelle und Form- und Füllstation ist eine Verdrängerpumpe vorgesehen, die über einen eingangsseitigen Abschnitt der Zuleitung mit der Flüssigkeitsquelle und über einen ausgangsseitigen Abschnitt mit dem Füllventil der Form- und Füllstation verbunden ist. Die Verdrängerpumpe ist so ausgelegt, dass sie das durch die Füllgutquelle bereitgestellte Füllgut mit dem gewünschten Volumenstromprofil und Druck in einen Vorformling pumpen kann.

Bezüglich der Auslegung des Begriffs "Füllgutquelle" wird auf die obigen Ausführungen verwiesen. Ergänzend soll noch erwähnt werden, dass die Füllgutquelle, z.B. ein Speicher oder Druckspeicher, Teil der Vorrichtung sein kann, aber auch separat, also extern dazu vorgesehen sein kann.

Erfindungsgemäß ist vorgesehen, dass die Verdrängerpumpe mit mindestens zwei Form- und Füllstationen in Strömungsverbindung ist, und so angesteuert und ausgelegt ist, dass sie die Stationen insbesondere nacheinander mit dem benötigten Füllgutvolumen in der gewünschten Geschwindigkeit versorgt.

Gegenüber den aus dem Stand der Technik bekannten Vorrichtungen, bei denen jeweils eine Verdrängerpumpe einer Form- und Füllstation zugeordnet ist, stellt die erfindungsgemäße Vorrichtung eine erhebliche bauliche Einsparung dar.

Denkbar ist, dass die Verdrängerpumpe eine Hubkolbenpumpe ist, die jeweils Teilhübe zur Versorgung der zugeordneten Form- und Füllstationen ausführt. Nachteilig an Hubkolbenpumpen ist, dass sie zunächst mit dem Füllgutvolumen befüllt werden müssen und dieses dann in einem zweiten Schritt abgeben. Die Befüllung der Kolbenpumpe erfolgt über ein Ladeventil, was die Konstruktion relativ aufwendig und auch langsam macht.

Bevorzugt sind daher als Verdrängerpumpen rundlaufende Pumpen vorgesehen mit z.B. verkämmt laufenden Kolben oder Zahnrädern, insbesondere Schraubenspindel-, Kreis- oder Drehkolbenpumpen. Rundlaufende Pumpen benötigen keine Ladeventile und sind in der Regel mittels Spülung etc. rückstandsfrei reinigbar. Eine CIP-Reinigung (cleaning in place) ist damit möglich. Außerdem können sie problemlos vorwärts und rückwärts fördern, was z.B. nach dem Form- und Füllvorgang zur Einstellung einer gewünschten Füllhöhe in dem Behälter oder bei einer druckfreien Flüssigkeitsquelle ausgenutzt werden kann.

Zur Versorgung einer Form- und Füllstation ist es lediglich erforderlich, die Pumpen einzuschalten und durch Einstellung einer definierten Umlaufgeschwindigkeit z.B. der kämmenden Kreis- oder Drehkolben das gewünschte Volumenstromprofil zu erzeugen.

Geeignete Pumpen sind im Stand der Technik bekannt und stehen in vielen unterschiedlichen Varianten im Markt zur Verfügung.

Wie aus dem Stand der Technik bekannt können bei der erfindungsgemäßen Vorrichtung die Form- und Füllstationen bevorzugt auf einem umlaufenden Arbeitsrad angeordnet werden. Die Verdrängerpumpen können dabei ebenfalls auf dem Arbeitsrad angeordnet werden. Denkbar ist aber auch, sie außerhalb des Arbeitsrades vorzusehen und über eine Drehdurchführung mit dem Arbeitsrad und den darauf angeordneten Form- und Füllstationen zu verbinden. Das gleiche gilt für den bzw. die Füllgutspeicher bzw. Füllgutdruckspeicher. Auch diese können außerhalb des Arbeitsrades oder mitdrehend vorgesehen werden. Weiterhin kann jeder Verdrängerpumpe eine Füllgutquelle zugeordnet sein. Denkbar ist aber auch, dass eine Quelle, z.B. Füllgutdruckspeicher mit entsprechender Auslegung, mit mehreren Verdrängerpumpen in Verbindung steht.

Im Folgenden soll die Erfindung anhand zweier Abbildungen näher erläutert werden. Dabei zeigt
- Fig. 1: ein Ausführungsbeispiel der erfindungsgemäßen Vorrichtung und Verfahren, und
- Fig. 2: ein weiteres Ausführungsbeispiel.

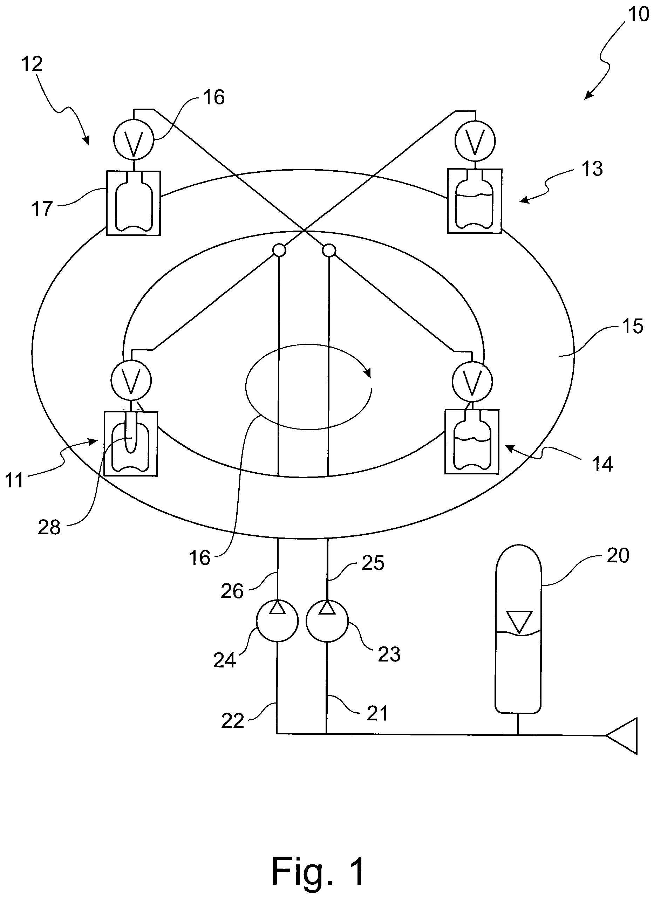

Fig. 1 zeigt eine Vorrichtung 10, bei der vier Form- und Füllstationen 11, 12, 13 und 14 auf einem Arbeitsrad 15 angeordnet sind, das in Richtung des Pfeils 16 umläuft. In der Regel sind auf einem Arbeitsrad mehr Form- und Füllstationen vorgesehen, z. B. 12. Die Reduzierung auf vier Stationen erfolgt aus Übersichtlichkeitsgründen. Dem Arbeitsrad bzw. einer darauf angeordneten Form- und Füllstation werden durch eine nicht gezeigte Vorrichtung in einer Position Vorformlinge 28 übergeben, die thermisch konditioniert sind. Im gezeigten Fall ist das z.B. die Position, in der sich die Form- und Füllstation 11 befindet. Die Vorformlinge 28 werden dann bei weiterer Drehung des Arbeitsrades 15 zu Behältern geformt und gefüllt (nicht dargestellt) und die fertigen, gefüllten Behälter in z.B. der Position, in der sich die Form- und Füllstation 14 befindet, an eine weitere Behandlungseinrichtung, z.B. einen Verschließer oder Etikettierer übergeben.

Jede der Form- und Füllstationen 11-14 weist ein Füllventil 16 und eine Form 17 auf, die die endgültige Form des zu befüllenden und formenden Vorformlings vorgibt. Außerhalb des Arbeitsrades 15 ist ein Füllgutdruckspeicher 20 vorgesehen, der von einer nicht dargestellten Pumpe mit Füllgut beaufschlagt wird. Wie oben erwähnt, stellt ein Füllgutdruckspeicher eine bevorzugte Ausgestaltung einer Füllgutquelle dar. Denkbar sind aber selbstverständlich auch andere Füllgutquellen.

Der Füllgutdruckspeicher 20 steht über eingangsseitige Abschnitte 21 und 22 einer Zuleitung mit Verdrängerpumpen 23 und 24 in Fluidverbindung. Die Pumpen 23 und 24 stehen ihrerseits über ausgangsseitige Abschnitte 25 und 26 einer Zuleitung in Strömungsverbindung mit den Form- und Füllstationen 11-14.

Im gezeigten Fall ist die Verdrängerpumpe 23 den Form- und Füllstationen 12 und 14 zugeordnet, während die Verdrängerpumpe 24 die Form- und Füllstationen 11 und 13 versorgt. Es wird zunächst die Form- und Füllstation 11 von der Pumpe 24 versorgt. Bei weiterer Drehung des Arbeitsrades 15 wird dann ein neuer Vorformling 28 in die Form- und Füllstation 14 eingesetzt und dieser mit der anderen Verdrängerpumpe 23 befüllt. Im nächsten Schritt folgt dann die Form- und Füllstation 13, die wiederum durch die Pumpe 24 versorgt wird usw..

Es versteht sich, dass wie schon oben ausgeführt, weitere Form- und Füllstationen auf dem Arbeitsrad angeordnet sein können z. B. 12 Stück. Von diesen 12 Form- und Füllstationen können mindestens zwei, aber auch mehr Stationen, jeweils von einer Verdrängerpumpe versorgt werden. Denkbar wäre z. B. bei einem Arbeitsrad mit 12 Positionen vier Pumpen vorzusehen, die jeweils drei Form- und Füllstationen versorgen. Die Versorgung aufeinanderfolgender Form- und Füllstationen durch unterschiedliche Verdrängerpumpen hat den Vorteil, dass sich schnellere Taktzahlen bzw. Umlaufgeschwindigkeiten des Arbeitsrades realisieren lassen.

Wie oben bereits ausgeführt wird das Füllgut im gezeigten Fall unter Druck durch den Druckspeicher 20 bereitgestellt, während die Verdrängerpumpen 23 und 24 den erforderlichen Volumenstrom und Druck während der Befüllung und Formung der Vorformlinge bereitstellen. Denkbar sind Volumenströme von z.B. bis 20 I/s. In der Regel variiert der Volumenstrom während der Befüllung. Denkbar ist z. B. zunächst mit einem niedrigeren Volumenstrom zu beginnen, diesen dann zu steigern und gegen Ende der Befüllung wieder abzusenken. Es ist natürlich auch denkbar, andere Volumenstromprofile vorzusehen. Dies hängt im Wesentlichen von dem Material der Vorformlinge etc. ab.

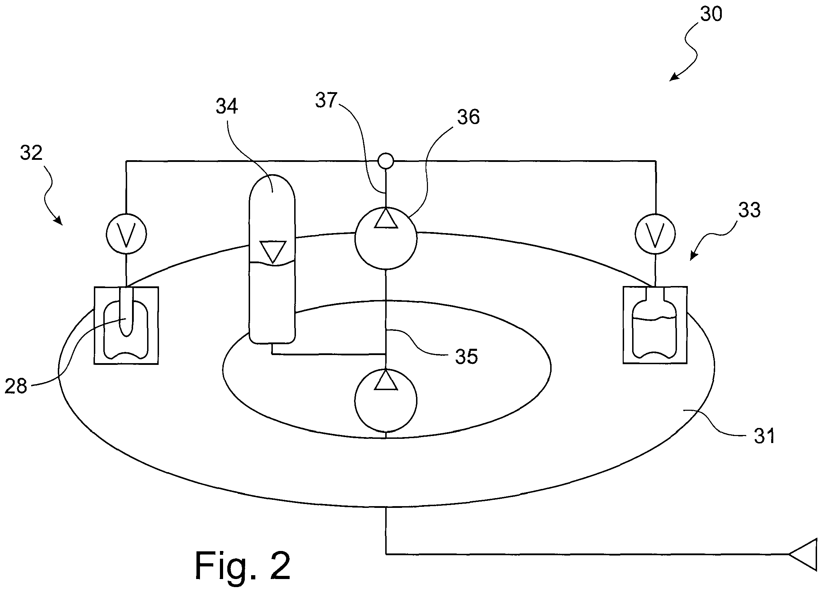

Fig. 2 zeigt im Wesentlichen eine ähnliche Vorrichtung 30 wie in Figur 1 dargestellt.

Wiederum zu erkennen ist ein Arbeitsrad 31, auf dem Form- und Füllstationen 32 und 33 angeordnet sind. In die Form- und Füllstation 32 ist ein Vorformling 28 eingesetzt. Auch hier ist ein Füllgutdruckspeicher 34 vorgesehen, der Füllgut unter Druck bereitstellt. Der Füllgutdruckspeicher 34 steht über einen eingangsseitigen Abschnitt einer Zuleitung 35 in Verbindung mit einer Verdrängerpumpe 36. Die Verdrängerpumpe 36 ist ihrerseits über einen ausgangsseitigen Abschnitt 37 mit den Füllstationen 32 und 33 verbunden. Im Unterschied zu der in Fig. 1 gezeigten Vorrichtung sind Druckspeicher 34 und Verdrängerpumpe 36 mitdrehend auf dem Arbeitsrad 31 angeordnet. Vorteil ist, dass die Distanz zwischen Verdrängerpumpe und Füllventil relativ kurz ist. Andererseits ist auch zu bedenken, dass durch Anordnung von Komponenten auf dem Arbeitsrad 31 dessen Gewicht steigt, was unter Umständen konstruktive Nachteile hat.

## Patentansprüche

1. Verfahren zum Herstellen von mit flüssigem Füllgut befüllten Behältern aus thermisch konditionierten Vorformlingen (28), bei dem Füllgut unter Druck an einer Form- und Füllstation (11, 12, 13, 14, 32, 33) durch ein Füllventil in den Vorformling (28) eingeleitet wird, wobei das Füllgut durch eine Füllgutquelle (20, 34) bereitgestellt wird und von einer zwischen Füllgutquelle (20, 34) und Form- und Füllstationen (11, 12, 13, 14, 32, 33) vorgesehenen Verdrängerpumpe (23, 24, 36) bei geöffnetem Füllventil in den Vorformling (28) gepumpt wird, **dadurch gekennzeichnet, dass** jeder Verdrängerpumpe (23, 24, 36) mindestens zwei Form- und Füllstationen (12, 14, 11, 13, 32, 33) zugeordnet sind, die von der Verdrängerpumpe (23, 24, 36), insbesondere nacheinander, mit Füllgut versorgt werden.

2. Verfahren nach Anspruch 1, **dadurch gekennzeichnet, dass** die Füllgutquelle ein Füllgutspeicher, insbesondere ein Füllgutdruckspeicher (20, 34) ist.

3. Verfahren nach Anspruch 1 oder 2, **dadurch gekennzeichnet, dass** mehrere Verdrängerpumpen (23, 24) vorgesehen sind, die eine Mehrzahl von Form- und Füllstationen (11, 13, 12, 14) in definierter Reihenfolge versorgen, wobei zwischen den von einer Verdrängerpumpe (23) versorgten Form- und Füllstationen (12, 14) mindestens eine Form- und Füllstation (13) liegt, die von einer anderen Verdrängerpumpe (24) versorgt wird.

4. Verfahren nach Anspruch 3, **dadurch gekennzeichnet, dass** die Verdrängerpumpen (23, 24) nacheinander jeweils die erste ihnen zugeordnete Form- und Füllstation (11, 14) versorgen und dann entsprechend die mindestens eine weitere zugeordnete Form- und Füllstation (13, 12).

5. Verfahren nach einer der vorhergehenden Ansprüche 1 bis 4, **dadurch gekennzeichnet, dass** die Form- und Füllstationen (11, 12, 13, 14, 32, 33) zeitlich überlappend mit Füllgut versorgt werden.

6. Verfahren nach einem der vorhergehenden Ansprüche 1 bis 5, **dadurch gekennzeichnet, dass** die Form- und Füllstationen (11, 12, 13, 14, 32, 33) auf einem Arbeitsrad (15, 31) angeordnet sind.

7. Vorrichtung zum Herstellen von mit flüssigem Füllgut befüllten Behältern aus thermisch konditionierten Vorformlingen (28) durch Einleiten eines Füllgutvolumens unter Druck an einer Form- und Füllstation (11, 12, 13, 14, 32, 33) durch ein Füllventil in den Vorformling (28), wobei das Füllgut durch eine Füllgutquelle (20, 34) bereitgestellt wird, die über eine Zuleitung mit dem Füllventil einer Form- und Füllstation (11, 12, 13, 14, 32, 33) verbunden ist, wobei zwischen Füllgutquelle (20, 34) und Form- und Füllstation (11, 12, 13, 14, 32, 33) eine Verdrängerpumpe (23, 24, 36) angeordnet ist, die über einen eingangsseitigen Abschnitt der Zuleitung mit der Füllgutquelle (20, 34) und über ein ausgangsseitigen Abschnitt mit dem Füllventil der Form- und Füllstation (11, 12, 13, 14, 32, 33) verbunden ist, wobei die Verdrängerpumpe (23, 24, 36) so ausgelegt ist, dass sie das Füllgut mit einem zur Ausformung der Vorformlinge (28) erforderlichen Druck und Volumenstromprofil in den ausgangsseitigen Abschnitt der Zuleitung abgeben kann, **dadurch gekennzeichnet, dass** die Verdrängerpumpe (23, 24, 36) mit mindestens zwei Form- und Füllstationen (11, 12, 13, 14, 32, 33) in Strömungsverbindung steht und so angesteuert und ausgelegt ist, dass sie die Stationen (11, 12, 13, 14, 32, 33), insbesondere nacheinander, versorgen kann.

8. Vorrichtung nach Anspruch 7, **dadurch gekennzeichnet, dass** die Füllgutquelle ein Füllgutspeicher, insbesondere ein Füllgutdruckspeicher (20, 34) ist.

9. Vorrichtung nach Anspruch 7 oder 8, **dadurch gekennzeichnet, dass** die Verdrängerpumpe (23, 24, 36) eine rotierende Pumpe, insbesondere eine Schraubenspindel-, Kreis- oder Drehkolbenpumpe ist.

10. Vorrichtung nach einen der Ansprüche 7 bis 9, **dadurch gekennzeichnet, dass** jeder Verdrängerpumpe (36) eine Füllgutquelle, insbesondere ein Füllgutdruckspeicher (34) zugeordnet ist.

11. Vorrichtung nach einen der Ansprüche 7 bis 10, **dadurch gekennzeichnet, dass** die Form- und Füllstationen (11, 12, 13, 14, 32, 33) auf einem rotierenden Arbeitsrad (15, 31) angeordnet sind.

12. Vorrichtung nach Anspruch 11, **dadurch gekennzeichnet, dass** die Verdrängerpumpe (23, 24) und/oder die Füllgutquelle (20) nicht auf dem Arbeitsrad angeordnet sind.

## Claims

1. Method for the production of containers filled with liquid filling material made from thermally conditioned preforms (28), in which the filling material is fed into the preform (28) under pressure at a forming and filling station (11, 12, 13, 14, 32, 33) through a filling valve, wherein the filling material is provided by a filling-material source (20, 34) and pumped into the preform (28) by a positive displacement pump (23, 24, 36) provided between the filling-material source (20, 34) and the forming and filling stations (11, 12, 13, 14, 32, 33) with the filling valve open, **characterized in that** at least two are assigned to each positive displacement pump (23, 24, 36) with the forming and filling stations (12, 14, 11, 13, 32, 33) being supplied with filling material by the positive displacement pump (23, 24, 36), in particular, being supplied one after the other.

2. Method according to Claim 1, **characterized in that** the filling-material source is a filling-material storage tank, in particular, a filling-material pressure tank (20, 34).

3. Method according to Claim 1 or 2, **characterized in that** a plurality of positive displacement pumps (23, 24) are provided which supply a plurality of forming and filling stations (11, 13, 12, 14) in a defined order, wherein, between the forming and filling stations (12, 14) supplied by a positive displacement pump (23), there is at least one forming and filling station (13) that is supplied by another positive displacement pump (24).

4. Method according to Claim 3, **characterized in that** the positive displacement pumps (23, 24) successively supply the first forming and filling station (11, 14) assigned to them and then the at least one other assigned forming and filling station (13, 12) accordingly.

5. Method according to any one of the preceding Claims 1 to 4, **characterized in that** the forming and filling stations (11, 12, 13, 14, 32, 33) are supplied with filling material in a time-overlapping manner.

6. Method according to any one of the preceding Claims 1 to 5, **characterized in that** the forming and filling stations (11, 12, 13, 14, 32, 33) are arranged on a work wheel (15, 31).

7. Device for the production of containers filled with liquid filling material made from thermally conditioned preforms (28) by introducing a filling-material volume under pressure into the preform (28) at a forming and filling station (11, 12, 13, 14, 32, 33) through a filling valve, wherein the filling material is provided by a filling-material source (20, 34) that is connected via a supply line to the filling valve of a forming and filling station (11, 12, 13, 14, 32, 33), wherein a positive displacement pump (23, 24, 36) is arranged between the filling-material source (20, 34) and the forming and filling station (11, 12, 13, 14, 32, 33), which is connected to the filling-material source (20, 34) via an inlet section of the supply line and connected to the filling valve of the forming and filling station (11, 12, 13, 14, 32, 33) via an outlet section, wherein the positive displacement pump (23, 24, 36) is designed in such a way that it can dispense the filling material into the outlet section of the supply line with a pressure and volumetric flow profile required for forming the preforms (28), **characterized in that** the positive displacement pump (23, 24, 36) has a flow connection to at least two forming and filling stations (11, 12, 13, 14, 32, 33) and is controlled and designed in such a way that it can supply the stations (11, 12, 13, 14, 32, 33), in particular one after the other.

8. Device according to Claim 7, **characterized in that** the filling-material source is a filling-material storage tank, in particular, a filling-material pressure tank (20, 34).

9. Device according to Claim 7 or 8, **characterized in that** the positive displacement pump (23, 24, 36) is a rotating pump, in particular, a screw spindle pump, circular or rotary lobe pump.

10. Device according to any one of the Claims 7 to 9, **characterized in that** a filling-material source, in particular, a filling-material pressure tank (34) is assigned to each positive displacement pump (36).

11. Device according to any one of the Claims 7 to 10, **characterized in that** the forming and filling stations (11, 12, 13, 14, 32, 33) are arranged on a rotating work wheel (15, 31).

12. Device according to Claim 11, **characterized in that** the positive displacement pump (23, 24) and/or the filling-material source (20) are not arranged on the work wheel.

## Revendications

1. Procédé de fabrication à partir de préformes (28) thermiquement conditionnées, de récipients remplis d'un produit de remplissage liquide, dans le cadre duquel un produit de remplissage sous pression est introduit dans la préforme (28) par une valve de remplissage dans une station de moulage et de remplissage (11, 12, 13, 14, 32, 33), le produit de remplissage étant mis à disposition par une source de produit de remplissage (20, 34) et est pompé par une pompe volumétrique (23, 24, 36) prévue entre la source de produit de remplissage (20, 34) et la station de moulage et de remplissage (11, 12, 13, 14, 32, 33) dans la préforme (28) lorsque la valve de remplissage est ouverte, **caractérisé en ce qu'**au moins deux station de moulage et de remplissage (12, 14, 11, 13, 32, 33) sont affectées à chaque pompe volumétrique (23, 24, 36) qui les alimente notamment successivement en produit de remplissage.

2. Procédé selon la revendication 1, **caractérisé en ce que** la source de produit de remplissage est un réservoir de produit de remplissage, notamment un réservoir de produit de remplissage sous pression (20, 34).

3. Procédé selon la revendication 1 ou 2, **caractérisé en ce que** plusieurs pompes volumétriques (23, 24) son prévues pour alimenter une pluralité de stations de moulage et de remplissage (11, 13, 12, 14) selon une séquence définie, les stations de moulage et de remplissage (12, 14) alimentées par une pompe volumétrique (23) étant séparées par au moins une station de moulage et de remplissage (13) alimentée par une autre pompe volumétrique (24).

4. Procédé selon la revendication 3, **caractérisé en ce que** les pompes volumétriques (23, 24) alimentent respectivement la première station de moulage et de remplissage (11, 14) qui leur est affectée puis, de façon analogue, la (les) autre(s) station(s) de moulage et de remplissage (13, 12) qui leur est (sont) affectée(s).

5. Procédé selon l'une des revendications précédentes 1 à 4, **caractérisé en ce que** les stations de moulage et de remplissage(11, 12, 13, 14, 32, 33) sont alimentées en produit de remplissage selon une séquence dont les intervalles de temps se chevauchent.

6. Procédé selon l'une des revendications précédentes 1 à 5, **caractérisé en ce que** les stations de moulage et de remplissage (11, 12, 13, 14, 32, 33) sont agencées sur une roue de travail (15, 31)

7. Dispositif de fabrication dans une station de moulage et de remplissage (11, 12, 13, 14, 32, 33) à partir de préformes (28) thermiquement conditionnées, de récipients remplis d'un produit de remplissage liquide par l'introduction, par une valve de remplissage, dans la préforme (28) d'un volume de produit de remplissage sous pression, le produit de remplissage étant mis à disposition par une source de produit de remplissage (20, 34) reliée par une conduite à la valve de remplissage d'une station de moulage et de remplissage (11, 12, 13, 14, 32, 33), une pompe volumétrique (23, 24, 36) étant agencée entre la source de produit de remplissage (20, 34) et la station de moulage et de remplissage (11, 12, 13, 14, 32, 33) et reliée à la source de produit de remplissage (20, 34) par une section côté entrée de la conduite d'amenée et à la station de moulage et de remplissage (11, 12, 13, 14, 32, 33) par une section côté sortie, la pompe volumétrique (23, 24, 36) étant conçue de façon à pouvoir transmettre à la section côté sortie de la conduite d'amenée le produit de remplissage avec la pression requise et un profil de débit volumétrique propres au formage des préformes (28), **caractérisé en ce que** la pompe volumétrique (23, 24, 36) est en liaison d'écoulement avec au moins deux stations de moulage et de remplissage (11, 12, 13, 14, 32, 33) et conçue et commandée de façon à pouvoir alimenter, notamment successivement, les stations (11, 12, 13, 14, 32, 33).

8. Dispositif selon la revendication 7, **caractérisé en ce que** la source de produit de remplissage est un réservoir de produit de remplissage, notamment un réservoir de produit de remplissage sous pression (20, 34).

9. Dispositif selon la revendication 7 ou 8, **caractérisé en ce que** la pompe volumétrique (23, 24, 36) est une pompe rotative, notamment une pompe à broche hélicoïdale ou une pompe à piston tournant ou rotatif.

10. Dispositif selon l'une des revendications 7 à 9, **caractérisé en ce que** chaque pompe volumétrique (36) est affectée à une source de produit de remplissage, notamment à un réservoir de produit de remplissage sous pression (34).

11. Dispositif selon l'une des revendications 7 à 10, **caractérisé en ce que** les stations de moulage et de remplissage (11, 12, 13, 14, 32, 33) sont agencées sur une roue de travail (15, 31) en rotation.

12. Dispositif selon la revendication 11, **caractérisé en ce que** la pompe volumétrique (23, 24) et/ou la source de produit de remplissage (20) n'est ou ne sont pas agencée(s) sur la roue de travail.
